(19) Europäisches Patentamt

European Patent Office

Office européen des brevets

(11) **EP 0 908 850 B1**

(12) **FASCICULE DE BREVET EUROPEEN**

(45) Date de publication et mention
de la délivrance du brevet:
**25.06.2003 Bulletin 2003/26**

(51) Int Cl.⁷: **G06T 17/30**

(21) Numéro de dépôt: **98402471.1**

(22) Date de dépôt: **06.10.1998**

(54) **Procédé de modification de forme pour système de conception assistée par ordinateur**

Verfahren zur Formmodifikation für ein CAD-System

A method of shape modification for CAD systems

(84) Etats contractants désignés:
**DE ES GB IT NL**

(30) Priorité: **08.10.1997 FR 9712546**

(43) Date de publication de la demande:
**14.04.1999 Bulletin 1999/15**

(73) Titulaire: **Open Cascade**
**75016 Paris (FR)**

(72) Inventeurs:
• **Massabo, Alain**
**13082 Aix en Provence (FR)**
• **Lieutier, André**
**13082 Aix en Provence (FR)**
• **Durand, Gérard**
**13082 Aix en Provence (FR)**
• **Goussard, Jacques**
**13082 Aix en Provence (FR)**

(74) Mandataire: **Fort, Jacques et al**
**CABINET PLASSERAUD**
**84, rue d'Amsterdam**
**75440 Paris Cedex 09 (FR)**

(56) Documents cités:
EP-A- 0 576 218          US-A- 4 821 214
US-A- 5 619 625          US-A- 5 636 338

• TERZOPOULOS D ET AL: "DYNAMIC NURBS WITH GEOMETRIC CONSTRAINTS FOR INTERACTIVE SCULPTING" ACM TRANSACTIONS ON GRAPHICS, vol. 13, no. 2, 1 avril 1994, pages 103-136, XP000461727
• WEN-HUI DU ET AL: "ON THE G1 CONTINUITY OF PIECEWISE BEZIER SURFACES: A REVIEW WITH NEW RESULTS" COMPUTER AIDED DESIGN, vol. 22, no. 9, 1 novembre 1990, pages 556-573, XP000165208
• HOSEOK K ET AL: "Deforming virtual objects interactively in accordance with an elastic model" COMPUTER AIDED DESIGN, vol. 28, no. 4, avril 1996, page 251-262 XP004022714

**Description**

La présente invention a pour objet un procédé de modification de forme, destiné à permettre à l'utilisateur d'un système de conception assistée par ordinateur de modifier une forme surfacique et à fournir à l'utilisateur une représentation de la forme modifiée.

On utilisera souvent par la suite le terme "surface". Il est à interpréter de façon générale, comme désignant non seulement une surface proprement dite, mais aussi une forme surfacique définie par morceaux $G^k$-continus ou une peau de volume ; k est un entier positif ou nul ; il peut même y avoir des arrachements, pour lesquels k=-1.

Pour des raisons constructives ou de style, on peut souhaiter modifier une zone ou la totalité d'une "surface" d'origine, définie par sa topologie, de façon à faire passer la nouvelle forme par un emplacement indiqué par un opérateur (ligne ou points déterminés) et cela en respectant ou non une continuité de plan tangent ou de courbure. Ces exigences constituent des contraintes internes. Les modifications doivent de plus satisfaire des contraintes externes, qui sont, avec une tolérance déterminée, la continuité entre la forme de la zone modifiée et le reste de la "surface" d'origine.

Un autre problème qui peut apparaître pour des raisons constructives de style est la génération d'une représentation d'une surface courbe remplissant une zone déterminée, en respectant des contraintes externes le long des frontières de la zone et des contraintes internes. Le document EP-A-0 576 218 décrit un procédé pour résoudre ce problème. Mais ce procédé est limité à l'obtention d'une continuité qui ne dépasse pas $G^1$ aux frontières. Suivant ce procédé antérieur, on génère une équation aux dérivées partielles qui représente la surface comme une membrane physique. Le procédé n'est pas utilisé pour modifier une forme pré-existante et ne permet pas d'arriver à une continuité d'ordre plus élevé aux frontières.

L'invention, suivant un premier aspect, vise à fournir un procédé de modification d'une zone existante en respectant une continuité $G^k$ (k étant au moins égal à -1) aux frontières et respectant des contraintes internes.

Dans ce but, l'invention propose notamment un procédé de modification de forme permettant de générer un modèle surfacique par déformation (et non pas par génération) d'une zone ou d'une "surface" d'origine, suivant lequel :

(a) on définit des contraintes externes de ladite zone comme étant des continuités $G^k$ le long d'une partie au moins des frontières, k étant au moins égal à -1;

(b) on définit des contraintes internes $G^n$ en des points ou des courbes prédéterminées à respecter par la zone modifiée, n étant un entier positif ou nul ;

(c) on définit une loi de direction de déformations pour tous les points de ladite zone ;

(d) on définit une déformation en chaque point de la zone dans une direction respectant la loi de direction comme le résultat de la déformation élastique d'une plaque plane mince infinie généralisée en équilibre, soumise à l'ensemble des contraintes externes et internes ; et

(e) on génère une zone modifiée en tant qu'une zone surfacique résultant de l'application de ladite déformation élastique à la zone de la forme d'origine.

Une continuité $G^0$ est une simple contrainte de passage. Une continuité d'ordre 1 est une contrainte de continuité de plan tangent. Une continuité d'ordre 2 respecte les courbures normales dans toutes les directions en un point ou suivant une courbe. Des valeurs supérieures de k et de n sont possibles et n'ont pas de contrepartie géométrique simple. Quelquefois une déchirure doit être obtenue entre la zone modifiée et le reste de la surface. Cela est désigné comme une continuité $G^{-1}$.

Le terme "généralisé" est à interpréter comme désignant un comportement pouvant aller, du point de vue de la mécanique, au-delà de celui d'une plaque mince réelle soumise à des actions mécaniques (forces ou moments) tendant à la déformer. La généralisation se fait sur les actions mécaniques et sur l'expression de "l'énergie" à minimiser. Au-delà de $G^2$, il s'agit d'ultra-réalité.

Une continuité $G^0+G^1$ le long d'un côté de la frontière exige que la plaque "généralisée" représentant la déformation reste plane le long de ce côté après déformation. Une contrainte externe $G^0$ à la frontière peut être regardée, par analogie avec des considérations mécaniques, comme l'exigence qu'il y ait une distribution déterminée de forces le long de la frontière. Dans le cas de contraintes d'ordre $G^1$, l'analogie avec une plaque revient à l'application, le long de la frontière, de moments ayant une distribution déterminée, s'ajoutant à la distribution des forces. En revanche, il n'y a pas d'analogie en matière de déformation des matériaux au-delà d'une contrainte $G^1$. Mais on a constaté que l'augmentation de k résulte dans une forme modifiée plus profonde, qui présente des pentes plus importantes.

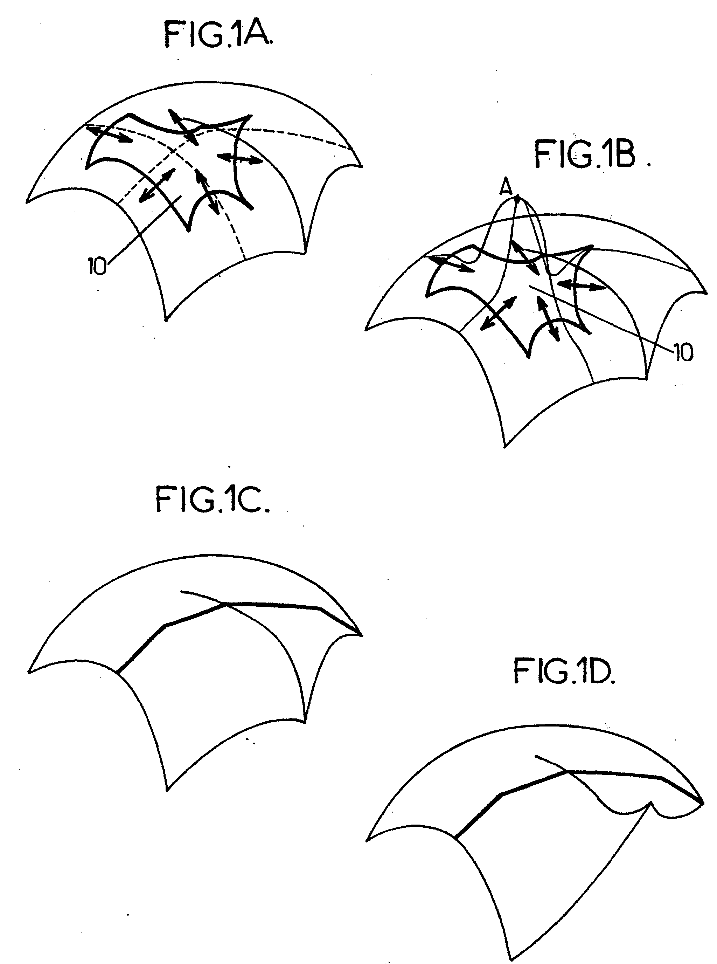

Le procédé ci-dessus est utilisable quel que soit le nombre de côtés curvilignes de la zone et quel que soit le nombre de sommets de la frontière, que cette frontière soit ou non ouverte, comme on le voit sur les figures 1A, 1B, 1C et 1D.

La précision sera élevée en certains points de la frontière où on imposera une coïncidence, mais en aucun autre point de la frontière elle ne devra être inférieure à une valeur prédéterminée. Pour respecter cette dernière condition, on pourra augmenter, en cas de besoin, les points situés sur la frontière où le critère de continuité est respecté de façon rigoureuse, à la quantification près, jusqu'à ce que le degré de précision souhaité soit respecté pour tous les points intermédiaires.

L'invention utilise une approche qu'on peut qualifier de "dessin commandé par l'objectif", c'est-à-dire la recherche d'une forme optimale satisfaisant des contraintes. Dans le cas présent, lorsqu'on modifie une zone :

- les contraintes sont celles à respecter le long de côtés de la frontière et celles, de même nature, situées en des emplacements qui sont contenus dans la zone déformée,
- l'objectif à atteindre est une "minimisation" de l'énergie généralisée de déformation.

Suivant un autre aspect de l'invention, il est proposé un procédé pour modifier une zone d'une surface en respectant des contraintes externes constituées par des continuités $G^k$, k étant en moyenne égal à -1, et des contraintes internes $G^n$, n étant au moins égal à zéro, impliquant la définition d'une déformation qui correspond à un minimum, sur tout l'espace paramétrique, d'une énergie de la forme :

$$E(\phi) = \int_{R^2} (\Delta^m \phi)^2 \qquad\qquad (1)$$

où :

R$^2$ désigne l'espace paramétrique à deux dimensions sur lequel sont projetées les frontières,
$\triangledown$ est l'opérateur du gradient,
m est un exposant qui permet de satisfaire l'ordre de la continuité recherchée, au moins égal à Sup{k,n}+2,
$\Phi$ désigne la fonction représentant la déformation.

Le calcul de minimisation doit s'effectuer en respectant également les contraintes de continuité le long de chacun des côtés de la zone à déformer. Les frontières peuvent être fermées ou débouchantes.

Dans la formule *(1)* ci-dessus, le cas m = 1 a une interprétation physique : la fonction E($\Phi$) définit l'énergie linéaire dune membrane horizontale infinie soumise à une contrainte uniforme, lorsque le champ de déplacement vertical est $\Phi$.

Dans le cas m = 2, E($\Phi$) définit l'énergie linéaire de flexion élastique d'une plaque fine infinie horizontale, ayant un coefficient de Poisson nul, dont le champ de déplacement vertical est $\Phi$.

Le cas m = 3 n'a pas de sens physique déterminé mais représente une solution qui provoque des variations très progressives, souvent particulièrement satisfaisantes du point de vue de l'esthétique notamment versus l'évolution des reflets de lumière sur la "surface" modifiée.

L'invention vise également à fournir un procédé permettant de remplir un trou dans une surface ou de générer une zone de raccordement en respectant des contraintes externes $G^k$, k étant au moins égal à 2, et des contraintes internes $G^n$, n étant au moins égal à zéro. Comme on l'a indiqué plus haut, le procédé décrit dans le document EP-A-0 576 218 n'est capable que de respecter des contraintes externes $G^0$ ou $G^1$.

Dans ce but, il est proposé un procédé de modification de la représentation d'une forme ayant une surface source, en générant une zone connectée à la surface source le long de frontières, suivant lequel :

(a) on définit des frontières de ladite zone en tant que des contraintes externes ayant des continuités $G^k$ le long d'au moins une fraction des frontières, k étant un entier au moins égal à 2 ;
(b) on définit des contraintes internes $G^n$ en des points ou des courbes à respecter par la zone générée, n étant un entier au moins égal à zéro ;
(c) on définit ladite zone comme résultant de la déformation élastique d'une plaque plane mince infinie généralisée en équilibre, respectant les contraintes internes et externes ; et
(d) on génère une représentation de la surface source et de la zone, reliées auxdites frontières.

Les caractéristiques ci-dessus ainsi que d'autres apparaîtront mieux à la lecture de la description, qui suit, d'un mode particulier de réalisation, donné à titre d'exemple non limitatif. La description se réfère aux dessins qui l'accompagnent, dans lesquels :

- les figures 1A, 1B, 1C, 1D montrent des déformations possibles d'une zone d'une "surface" ;
- la figure 2 est une représentation schématique de la déformation, dans un seul plan parallèle à une direction commune de déformation, montrant les paramètres qui interviennent ;

- la figure 3 est un schéma montrant une distribution possible des forces à l'équilibre permettant le calcul de la zone déformée dans le cas de contraintes $G^0$ le long de la frontière ;
- la figure 4 est un synoptique de principe montrant les opérations effectuées pour la détermination des déformations.

Les figures 1A et 1B montrent un exemple d'application de l'invention. La zone 10 de la figure 1A, délimitée par cinq côtés curvilignes et ayant autant de sommets, doit être déformée pour l'amener jusqu'au point A, en respectant une continuité $G^1$ (indiquée par les flèches doubles). Cela signifie que les plans tangents à la "surface" d'origine le long de la frontière doivent rester des plans tangents à la fois à la zone déformée et au reste de la "surface" d'origine (figure 1B).

Dans le cas illustré sur les figures 1A et 1B, la zone à déformer est fermée. Mais l'invention est également applicable à une zone débouchante (figures 1C et 1D).

De plus, en demandant une contrainte $G^{-1}$ sur l'un côté de la frontière montrée en figure 1A, une déchirure pourrait apparaître entre la zone déformée et le reste de la "surface".

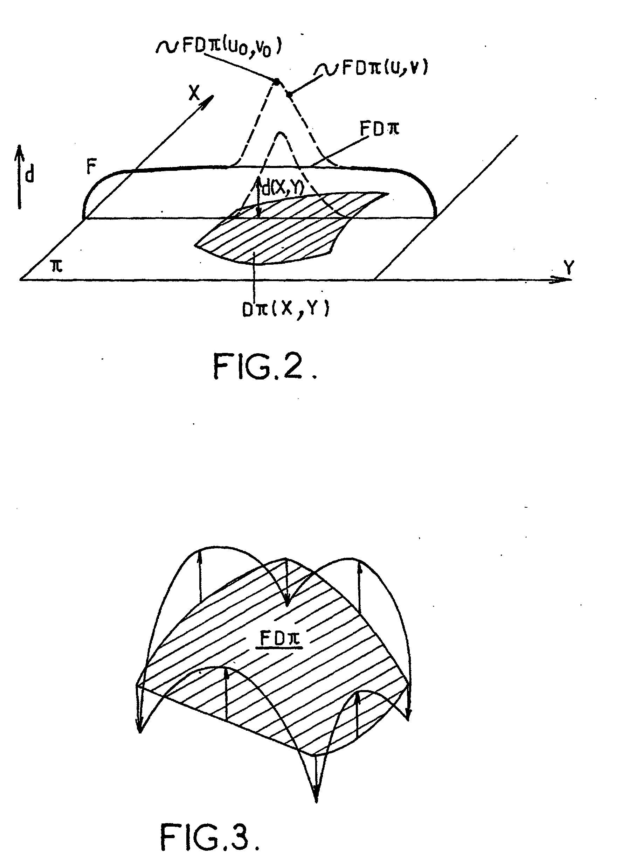

On décrira maintenant, en faisant référence à la figure 2, les principes mis en oeuvre par l'invention en ne considérant qu'une seule tranche de la "surface" à modifier, parallèle à la direction d de déformation choisie. Les contours définissant la zone à modifier se projettent parallèlement à d sur un plan perpendiculaire $\Pi$. Ils constituent un domaine plan $D\Pi(X,Y)$ sur lequel on pourra définir la loi de déformation $d(X,Y)$. Dans ce cas, d correspond à $\Phi$ dans la formule *(1)*. Les coordonnées planes X et Y, correspondent à des coordonnées (u,v) de la forme initiale de la zone à déformer. En général, les côtés curvilignes de la zone seront définis sous une forme approximée par des équations paramétriques polynomiales (ou rationnelles), choisies de façon à assurer la précision requise.

Dans le plan parallèle à d montré en figure 2, c'est la zone $F_{D\Pi}$ de la forme globale F incluse dans $D\Pi$ qui sera modifiée pour donner $\sim F_{D\Pi}$.

La forme finale modifiée sera obtenue par recollage de $\sim F_{D\Pi}$ et de la restriction $(F-F_{D\Pi})$.

$F_{D\Pi}$ est exprimé, en vue du calcul, dans le système d'axes du plan de $D\Pi$ sous la forme :

$$X_{D\Pi}(u,v),$$
$$Y_{D\Pi}(u,v),$$
$$F_{D\Pi}(u,v).$$

La relation entre les paramètres sera alors :

$$\sim F_{D\Pi}(u,v) = \text{Approximation } [F_{D\Pi}(u,v)+d(X_{D\Pi}(u,v), Y_{D\Pi}(u,v))]$$

Dans le cas illustré sur la figure 2, les contraintes externes sont le fait que la loi de déformation doit conserver les courbures normales au long de la frontière (continuité $G^2$). Alors m=2+2, c'est-à-dire 4.

Si en revanche m=0, l'équation (1) devient :

$$\int_0^\infty \left[ \frac{\partial^2 \phi}{\partial u^2} + 2\left(\frac{\partial^2 \varphi}{\partial u . \partial v}\right)^2 + \left(\frac{\partial 2\varphi}{\partial v 2}\right) \right] du.dv$$

Une contrainte interne est introduite par exemple à l'aide des dispositifs d'interaction homme - ordinateur tels une souris, une boule dite "track ball" ou toute autre poignée de manipulation sur un écran .

La contrainte interne peut être le fait que la zone déformée passe par un point $\sim F_{D\Pi}(u_0,v_0)$ où la direction du plan tangent initial est conservé. Dans ce cas, il faut que les dérivées partielles en $(u_0,v_0)$ remplissent les conditions :

$$\partial d/\partial u = 0$$

$$\partial d/\partial v = 0$$

Cette condition est imposée avant les approximations nécessaires, comme on verra ci-dessous. Ces approximations se font sur le plus petit rectangle plan contenant $D\Pi$ dans le plan de projection.

Avant de faire référence à une définition mathématique des lois de déformation, il peut être utile de fournir une explication fondée sur la déformation élastique d'une plaque plane mince infinie en équilibre soumise à une distribution de forces ou de moments généralisés le long des frontières d'un domaine pour respecter des contraintes de continuité: Lorsque la contrainte G est d'ordre k (recherche d'une continuité $G^k$), la forme modifiée résultera avantageusement de la recherche d'un minimum de l'énergie d'ordre m = k+2. La solution sous forme d'une représentation polynomiale (admissible par la plupart des systèmes de conception et fabrication assistées par ordinateur) sera obtenue par une approximation, puisque la solution optimale théorique fait intervenir des logarithmes.

Il est essentiel de garder en mémoire que la déformation d(X,Y) est celle d'une plaque initialement plane et infinie, et non pas celle d'une plaque ayant la forme d'origine, dans l'analogie mathématique.

Sur la figure 3, on a montré, à titre d'exemple, une distribution de forces correspondant à une déformation particulière, avec une contrainte de passage le long des côtés du domaine.

Plus généralement, et comme on l'a vu plus haut, la démarche, qui permettra de déterminer la forme en respectant les contraintes externes (contraintes de bord) et internes (par exemple passage par un emplacement déterminé) sera constituée par la recherche de la déformation correspondant au minimum de l'énergie E($\phi$) donnée par la formule *(1)*. Cette démarche peut constituer une extrapolation et une adaptation de celle décrite dans l'article "An Aesthetic Preserving Algorithm for Accuracy Incompatible Modelers Data Exchange" par G. Durand, A. Leutier et A. Massabo, IDMME, 1996.

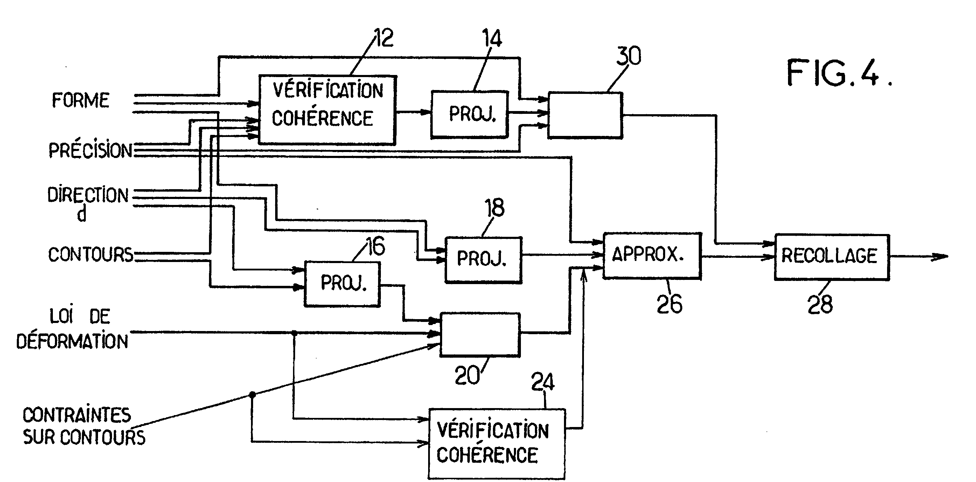

La figure 4 montre les fonctions à réaliser dans la mise en oeuvre du procédé. Certaines de ces fonctions sont simplement optionnelles et la plupart sont déjà réalisées par des modules logiciels disponibles.

Les paramètres d'entrée, fournis par un opérateur, comportent au moins :

- l'identification des contours de la zone à modifier, pouvant être introduite par exemple par pointage sur un écran ou sous forme de coordonnées,
- la direction de déformation d choisie (ou la loi de direction dans le cas où les directions sont variables),
- les contraintes à respecter sur les contours,
- enfin, les caractéristiques de forme que doit respecter le modèle de déformation (contraintes internes).

Un premier module logiciel 12 peut être prévu pour vérifier la cohérence entre au moins la forme recherchée, la direction de déformation d, et les contours à respecter. Dans certains cas en effet, une déformation suivant la direction d seule peut ne pas permettre de respecter les contraintes internes imposées au modèle.

Une fois cette cohérence vérifiée, la forme est traitée par un module 14 qui en donne une projection parallèle à la direction d (sur le plan Π de la figure 2).

La projection sur le plan Π des contours, suivant la direction d, est elle aussi déterminée par un module 16.

Un autre module 18 calcule la projection de la forme sur le plan Π.

Les déformations d(X,Y) sont calculées par un module 20 qui applique un algorithme du type "plaque mince infinie élastique", mentionné plus haut, en respectant les contraintes relatives. Cet algorithme est appliqué dans le plan Π, c'est-à-dire à partir d'une forme plane, et non pas dans l'espace 3D ; les déformations ainsi obtenues sont appliquées à la "surface" d'origine dans la zone retenue.

Enfin, une opération de recollage est effectuée par le module 28 entre le modèle calculé et la forme de la "surface" restante calculée au préalable dans un module 30 par suppression de la zone modifiée.

On sera amené à respecter des critères de précision quant au raccordement de la forme modifiée avec la "surface" restante ou du raccordement des tronçons de la forme modifiée entre eux. Dans ce cas, les paramètres introduits comportent des indications de précision, tenant compte de la continuité interne initiale de la forme à modifier.

Le problème du respect de la précision se pose en particulier lorsque la "surface" à modifier comporte plusieurs éléments surfaciques se raccordant suivant des lignes qui ne concordent (notamment à cause d'approximations antérieures) qu'avec une précision limitée. Dans ce cas, le recollage devra être effectué après approximation en respectant les contraintes de précision. L'approximation peut être faite soit sur la forme déformée, soit sur la déformation.

**Revendications**

**1.** Procédé de production d'une image par modification dune forme d'une zone d'une surface d'origine, suivant lequel :

(a) on définit des frontières de la zone à modifier en tant que des contraintes externes constituées par des continuités $G^k$ le long d'au moins une fraction des frontières, k étant au moins égal à -1 ;
(b) on définit des contraintes internes $G^n$ en des points ou des courbes, à respecter par la zone une fois modifiée, n étant un entier positif ou nul ;
(c) on sélectionne une loi de direction ou de déformation pour tous les points de ladite zone ;

(d) on définit une déformation qui correspond à un minimum sur toute l'espace paramétrique, d'une énergie :

$$E(\phi) = \int_{R^2} \left(\nabla^m \phi\right)^2$$

où

R$^2$ désigne l'espace paramétrique à deux dimensions sur lequel est projetée la frontière,
$\nabla$ est l'opérateur du gradient,
m est un exposant qui permet de satisfaire l'ordre de la continuité recherchée,
$\phi$ désigne la fonction de déformation.

2. Procédé selon la revendication 1, **caractérisé en ce qu'**on adopte une même direction de déformation pour tous les points de la zone.

3. Procédé selon l'une quelconque des revendications précédentes, **caractérisé en ce que** la contrainte interne est constituée par la définition d'un point et/ou d'une courbe :

   o   par lesquels doit passer le modèle, et/ou
   o   pour lesquels le plan tangent et/ou la nappe osculatrice peuvent être imposés, et/ou
   o   pour lesquels les courbures normales et/ou la quadrique osculatrice peuvent être imposées.

4. Procédé suivant la revendication 1, suivant lequel on définit la déformation comme la déformation élastique d'une plaque plane mince infinie généralisée en équilibre, respectant les contraintes internes et externes et on génère une représentation de l'ensemble de la zone modifiée et du reste de la surface source, reliés auxdites frontières.

5. Procédé selon la revendication 1, **caractérisé en ce qu'**on introduit en tant que contraintes internes, l'équation d'un point ou d'une courbe par laquelle doit passer la zone déformée

6. Programme pour système de conception assistée par ordinateur qui, lorsqu'il est chargé dans un ordinateur, met en oeuvre un procédé de production d'une forme d'une zone d'une surface d'origine, procédé suivant lequel :

   (a) on définit des frontières de la zone à modifier en tant que des contraintes externes constituées par des continuités G$^k$ le long d'au moins une fraction des frontières, k étant au moins égal à -1 ;
   (b) on définit des contraintes internes G$^n$ en des points ou des courbes à respecter par la zone une fois modifiée, n étant un entier positif ou nul ;
   (c) on sélectionne une loi de direction ou de déformation pour tous les points de ladite zone ;
   (d) on définit une déformation qui correspond à un minimum sur toute l'espace paramétrique, d'une énergie :

$$E(\phi) = \int_{R^2} \left(\nabla^m \phi\right)^2$$

où

R$^2$ désigne l'espace paramétrique à deux dimensions sur lequel est projetée la frontière,
$\nabla$ est l'opérateur du gradient,
m est un exposant qui permet de satisfaire l'ordre de la continuité recherchée.
$\phi$ désigne la fonction de déformation.

**Patentansprüche**

1. Verfahren zur Erzeugung eines Bildes durch Modifikation der Form einer Zone einer Ursprungsfläche, das folgende Schritte umfasst:

a. Man definiert Grenzen der zu modifizierenden Zone als äußere Randbedingungen, die durch Stetigkeiten $G^k$ entlang wenigstens eines Teils der Grenzen gebildet sind, wobei k wenigstens gleich -1 ist;

b. Man definiert innere Randbedingungen $G^n$ in Punkten oder Kurven, die die modifizierte Zone erfüllen muss, wobei n eine positive ganze Zahl oder Null ist;

c. Man wählt ein Richtungs- oder Verformungsgesetz für alle Punkte der Zone;

d. Man definiert eine Verformung die auf dem gesamten parametrisierten Raum einem Minimum einer Energie entspricht:

$$E(\phi) = \int_{R^2} (\nabla^m \phi)^2$$

wobei

$R^2$ den parametrisierten zweidimensionalen Raum bezeichnet, auf den die Grenze projiziert wird,
$\nabla$ der Gradientenoperator ist,
m ein Exponent ist, der es erlaubt, der gewünschten Ordnung der Stetigkeit zu genügen, und
$\Phi$ die Verformungsfunktion bezeichnet.

2. Verfahren nach Anspruch 1, **dadurch gekennzeichnet, dass** eine gleiche Verformungsrichtung für alle Punkte der Zone angenommen wird.

3. Verfahren nach einem der vorgenannten Ansprüche, **dadurch gekennzeichnet, dass** die innere Randbedingung durch die Definition eines Punktes und/oder einer Kurve gebildet wird:

- durch die das Modell gehen muss, und/oder
- für die die Tangentialebene und/oder die Schmiegebene gebildet werden können, und/oder
- für die die Normalkurven und/oder die Schmiegebene zweiter Ordnung gebildet werden können.

4. Verfahren nach Anspruch 1, nach dem die Verformung als elastische Verformung einer allgemeinen, dünnen, unendlichen, ebenen Platte im Gleichgewicht definiert ist, die den inneren und äußeren Zwangsbedingungen genügt, und gemäß dem man eine Abbildung der Gesamtheit aus der modifizierten Zone und der restlichen Ursprungsfläche erzeugt, die an den Grenzen verbunden sind.

5. Verfahren nach Anspruch 1, **dadurch gekennzeichnet, dass** man als innere Randbedingungen die Gleichung eines Punktes oder einer Kurve einführt, durch die die verformte Zone gehen muss.

6. Programm für ein Computer-unterstütztes Planungssystem, das, wenn es in einen Computer geladen wird, ein Verfahren zur Herstellung einer Form einer Zone einer Ursprungsfläche ausführt, das folgende Schritte umfasst:

a. Man definiert Grenzen der zu modifizierenden Zone als äußere Randbedingungen, die durch Stetigkeiten $G^k$ entlang wenigstens eines Teils der Grenzen gebildet sind, wobei k wenigstens gleich -1 ist;

b. Man definiert innere Randbedingungen $G^n$ an Punkten oder Kurven, die von der modifizierten Zone erfüllt sein müssen, wobei n eine positive ganze Zahl oder Null ist;

c. Man wählt ein Richtungs- oder Verformungsgesetz für alle Punkte der Zone;

d. Man definiert eine Verformung die auf dem gesamten parametrisierten Raum einem Minimum einer Energie entspricht:

$$E(\phi) = \int_{R^2} (\nabla^m \phi)^2$$

wobei

R$^2$ den parametrisierten zweidimensionalen Raum bezeichnet, auf den die Grenze projiziert wird,
$\nabla$ der Gradientenoperator ist,
m ein Exponent ist, der es erlaubt, der gewünschten Ordnung der Stetigkeit zu genügen; und
Φ die Verformungsfunktion bezeichnet.

**Claims**

1. A method of generating an image by modifying a shape of a zone of an origin surface, comprising:

   (a) defining boundaries of said zone to be modified as outer constraints contituted by continuities $G^k$ along at least a part of said boundaries, with k being an integer at least equal to -1 ;

   (b) defining inner constraints $G^n$ on points and curves to be respected by said zone when modified, with n being an integer positive or equal to zero;

   (c) selecting a deformation direction law for all points of said zone;

   (d) defining a deformation which corresponds to a minimum over the whole parametric space of an energy:

$$E(\phi) = \int_{R^2} \left( \nabla^m \phi \right)^2$$

   where

   R$^2$ is a two-dimensional parametric space on which said boundaries are projected,
   $\nabla$ is the gradient operator,
   m is a power which permits to satisfy the continuity order, to be obtained,
   $\phi$ is the deformation function.

2. Method according to claim 1, **characterized in that** a same deformation direction law is selected for all points of the zone.

3. Method according to any one of the preceding claims, **characterized in that** the inner constraint is constituted by the definition of a point and/or a curve:

   - through which the model should pass, and/or,
   - at which the tangent plane and/or an osculatory plane can be predetermined, and/or
   - at which the normal curvatures and / or the osculatory second order surface can be predetermined

4. Method according to claim 1, wherein the deformation is defined as a resilient deformation of a generalized infinite thin planar plate in equilibrium, respecting the outer and inner constraints and wherein a representation of the whole of the modified zone and of the balance of the original surface, connected at said boundaries, is generated.

5. Method according to claim 1, **characterized by** introducing, as inner constraints, the equation of a point or curve through which the modified zone should pass.

6. Program for a computer aided system which, when loaded in a computer, implements a method of generating an image by modifying a shape of a zone of an origin surface, which process comprises :

(a) defining boundaries of the zone to be modified as outer constraints constituted by continuities $G^k$ along at least part of said boundaries, with k being an integer at least equal to -1;

(b) defining inner constraints $G^n$ on points and curves to be respected by said zone when modified, with n being an integer positive or equal to zero;

(c) selecting a deformation direction law for all points of said zone;

(d) defining a deformation which corresponds to a minimum over the whole parametric space of an energy:

$$E(\phi) = \int_{R^2} \left( \nabla^m \phi \right)^2$$

where

$R^2$ is a two-dimensional parametric space on which said boundaries are projected,
$\nabla$ is the gradient operator,
m is a power which permits to satisfy the continuity order, to be obtained,
$\phi$ is the deformation function.

FIG.1A.

FIG.1B.

FIG.1C.

FIG.1D.

FIG.2.

FIG.3.

FIG.4.